(19) Europäisches Patentamt
European Patent Office
Office européen des brevets

(11) **EP 4 776 718 A1**

(12) **EUROPEAN PATENT APPLICATION**
published in accordance with Art. 153(4) EPC

(43) Date of publication:
**15.07.2026 Bulletin 2026/29**

(21) Application number: **23951189.2**

(22) Date of filing: **07.09.2023**

(51) International Patent Classification (IPC):
***H04W 72/044*** *(2023.01)*

(52) Cooperative Patent Classification (CPC):
**H04W 72/044**

(86) International application number:
**PCT/CN2023/117581**

(87) International publication number:
**WO 2025/050367 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **DU, Zhongda**
**Dongguan, Guangdong 523860 (CN)**

(74) Representative: **Mewburn Ellis LLP**
**Aurora Building**
**Counterslip**
**Bristol BS1 6BX (GB)**

(54) **RESOURCE ALLOCATION METHOD, AND DEVICE**

(57)    This disclosure relates to a resource allocation method and a device. The method includes the following. A terminal device obtains second token variables for multiple logical channels based on allocable radio resources and first token variables for the multiple logical channels. The terminal device allocates the allocable radio resources among the multiple logical channels based on the second token variables for the multiple logical channels and logical channel priorities. In embodiments of the disclosure, by adjusting token variables for logical channels, radio resources can be more reasonably allocated among the multiple logical channels, thereby alleviating the problem of starvation of the logical channels.

300

TERMINAL DEVICE OBTAINS SECOND TOKEN VARIABLES FOR MULTIPLE LOGICAL CHANNELS BASED ON ALLOCABLE RADIO RESOURCES AND FIRST TOKEN VARIABLES FOR MULTIPLE LOGICAL CHANNELS — S310

TERMINAL DEVICE ALLOCATES ALLOCABLE RADIO RESOURCES AMONG MULTIPLE LOGICAL CHANNELS BASED ON SECOND TOKEN VARIABLES FOR MULTIPLE LOGICAL CHANNELS AND LOGICAL CHANNEL PRIORITIES — S320

FIG. 3

**Description**

TECHNICAL FIELD

This disclosure relates to the field of communication, and more specifically to a resource allocation method and a device.

BACKGROUND

In a 3rd generation partnership project (3GPP) cellular system, when a user equipment (UE) is scheduled in an uplink direction, if there is more than one scheduled logical channel, resource blocks need to be shared between different logical channels for uplink data transmission. One of important parameters is a logical channel priority. Radio resources may be allocated to logical channels in an order of logical channel priorities, but a low-priority logical channel is prone to starvation.

SUMMARY

A resource allocation method and a device are provided in embodiments of the disclosure, which can allocate radio resources more reasonably between different logical channels.

A resource allocation method is provided in embodiments of the disclosure. The method includes the following. A terminal device obtains second token variables for multiple logical channels based on allocable radio resources and first token variables for the multiple logical channels. The terminal device allocates the allocable radio resources among the multiple logical channels based on the second token variables for the multiple logical channels and logical channel priorities.

A terminal device is provided in embodiments of the disclosure. The terminal device includes a processing unit and an allocating unit. The processing unit is configured to obtain second token variables for multiple logical channels based on allocable radio resources and first token variables for the multiple logical channels. The allocating unit is configured to allocate the allocable radio resources among the multiple logical channels based on the second token variables for the multiple logical channels and logical channel priorities.

A terminal device is provided in embodiments of the disclosure. The terminal device includes a transceiver, a processor, and a memory. The memory is configured to store a computer program, the transceiver is configured to communicate with other devices, and the processor is configured to invoke and execute the computer program stored in the memory, to cause the terminal device to perform the above resource allocation method.

A chip is provided in embodiments of the disclosure. The chip is configured to implement the above resource allocation method. Specifically, the chip includes a processor. The processor is configured to invoke and execute a computer program stored in a memory, to cause a device equipped with the chip to perform the above resource allocation method.

A computer-readable storage medium is provided in embodiments of the disclosure. The computer-readable storage medium is configured to store a computer program which, when executed by a device, causes the device to perform the above resource allocation method.

A computer program product is provided in embodiments of the disclosure. The computer program product includes computer program instructions which cause a computer to perform the above resource allocation method.

A computer program is provided in embodiments of the disclosure. The computer program, when executed by a computer, causes the computer to perform the above resource allocation method.

In embodiments of the disclosure, by adjusting token variables for logical channels, radio resources can be more reasonably allocated among multiple logical channels, thereby alleviating the problem of starvation of the logical channels.

BRIEF DESCRIPTION OF THE DRAWINGS

FIG. 1 is a schematic diagram of an application scenario according to embodiments of the disclosure.

FIG. 2 is a schematic diagram illustrating participation of logical channels in logical channel prioritization (LCP).

FIG. 3 is a schematic flowchart of a resource allocation method according to an embodiment of the disclosure.

FIG. 4 is a schematic flowchart of a resource allocation method according to another embodiment of the disclosure.

FIG. 5 is a schematic block diagram of a terminal device according to an embodiment of the disclosure.

FIG. 6 is a schematic block diagram of a terminal device according to another embodiment of the disclosure.

FIG. 7 is a schematic block diagram of a communication device according to embodiments of the disclosure.

FIG. 8 is a schematic block diagram of a chip according to embodiments of the disclosure.

FIG. 9 is a schematic block diagram of a communication system according to embodiments of the disclosure.

DETAILED DESCRIPTION

The following will describe technical solutions of embodiments of the disclosure with reference to the accompanying drawings in embodiments of the disclosure.

The technical solutions of the embodiments of the disclosure may be applied to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th-generation (5G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle-to-everything (V2X) communication, or the like. Embodiments of the disclosure can also be applied to these communication systems.

In an embodiment, a communication system in embodiments of the disclosure may be applied to a carrier aggregation (CA) scenario, a dual connectivity (DC) scenario, or a standalone (SA) network deployment scenario.

In an embodiment, the communication system in embodiments of the disclosure may be applied to an unlicensed spectrum, and the unlicensed spectrum may be regarded as a shared spectrum. Alternatively, the communication system in embodiments of the disclosure may be applied to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device or other processing device connected to a wireless modem, an in-vehicle device, a wearable device, and a terminal device in a next-generation communication system, for example, a terminal device in an NR network, or a terminal device in a future evolved public land mobile network (PLMN), and the like.

In embodiments of the disclosure, the terminal device can be deployed on land, which includes indoor or outdoor, handheld, wearable, or in-vehicle. The terminal device can also be deployed on water (such as ships, and the like). The terminal device can also be deployed in the air (such as airplanes, balloons, satellites, and the like).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device. The network device may be an access point (AP) in a WLAN, or may be an evolutional node B (eNB or eNodeB) in LTE, or a relay station or an AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

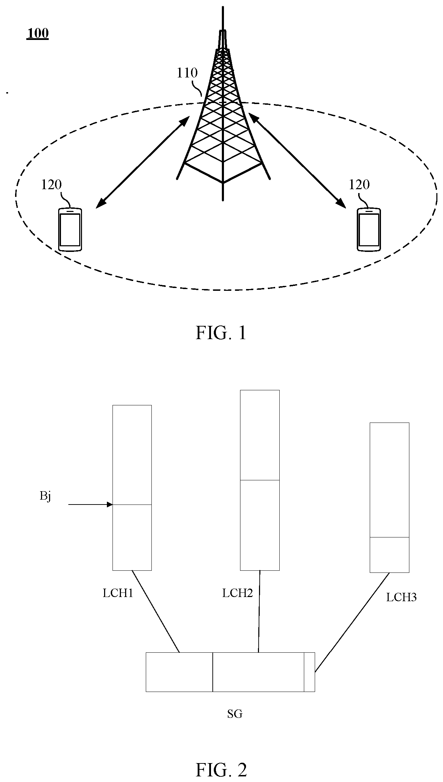

FIG. 1 exemplarily illustrates a communication system 100. The communication system 100 includes one network device 110 and two terminal devices 120. In an embodiment, the communication system 100 may include multiple network devices 110, and there can be other quantities of terminal devices 120 in a coverage area of each of the network devices 110. Embodiments of the disclosure are not limited in this regard.

In an embodiment, the communication system 100 may further include other network entities such as a mobility management entity (MME) and an access and mobility management function (AMF), and embodiments of the disclosure are not limited in this regard.

The network device may further include an access-network device and a core-network device, that is, the wireless communication system may further include multiple core-networks capable of communicating with the access-network device. The access-network device may be an evolutional node B (eNB or e-NodeB for short), a macro base station, a micro base station (also known as "small base station"), a pico base station, an AP, a transmission point (TP), or a new generation node B (gNodeB) in an LTE system, an NR system, or an authorized auxiliary access long-term evolution (LAA-LTE) system.

It may be understood that in embodiments of the disclosure, a device with communication functions in a network/system may be referred to as a "communication device". Taking the communication system illustrated in FIG. 1 as an example, the communication device may include the network device and the terminal device(s) that have communication functions. The network device and the terminal device(s) can be the devices in the embodiments of the disclosure, which will not be repeated herein. The communication device may further include other devices such as a network controller, a mobility management entity, or other network entities in the communication system, and embodiments of the disclosure are not limited in this regard.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

For better understanding of technical solutions of embodiments of the disclosure, the related art of embodiments of the disclosure will be described below. The related art below, as an optional scheme, can be arbitrarily combined with the technical solutions of embodiments of the disclosure, which shall all belong to the protection scope of embodiments of the disclosure.

In the 3rd generation (3G) system such as wideband code division multiple access (WCDMA) of the 3rd generation partnership project (3GPP), a logical channel priority is a parameter as the only reference in logical channel prioritization (LCP). Taking two logical channels LCH_1 and LCH_2 as an example, priorities of LCH_1 and LCH_2 are LCH1_P and LCH2_P respectively, and buffers of data that need to be transmitted on LCH_1 and LCH_2 at a certain moment are LCH1_Buf and LCH2_Buf respectively. A size of a radio resource block participating in allocation may be represented by a serving grant (SG). Based on the SG, a terminal may calculate the size of the radio resource block in bytes.

An example of a method for allocating radio resources to logical channels is as follows.

Step 1, logical channels are prioritized (assuming that a priority of LCH_1 is higher than a priority of LCH_2, the first logical channel is LCH_1).

Step 2, radio resources are allocated to LCH_1. If SG<=LCH_B1, the process ends, and otherwise, step 3 is performed.

Step 3, remaining radio resources (i.e., SG-LCH1_Buf) are allocated to LCH_2.

When the number (quantity) of logical channels is greater than 2, the method stays the same. That is, the radio resources are allocated in an order of logical channel priorities until all the radio resources are allocated or the last logical channel has received its allocation.

This method may lead to "starvation". That is, when the SG is less than the sum of buffers of the logical channels and a high-priority logical channel always has buffers to be transmitted, for a low-priority logical channel, scheduling cannot be performed or few radio resources are allocated, which cannot satisfy basic quality of service (QoS) requirements, thereby leading to starvation.

In the fourth generation (4G) and 5G systems of the 3GPP, a token bucket algorithm is used for LCP, which can alleviate or even overcome the above problem of starvation. A specific method thereof is as follows.

A priority bit rate (PBR) and a token bucket (also referred to as a bucket size (BS)) are configured for each logical channel according to QoS requirements, where the token bucket may be represented by PBR_BS. In addition, a token variable Bj is locally configured. For each logical channel, Bj is accumulated over time, but a maximum value of Bj does not exceed PBR_BS, i.e., $Bj=Bj+ PBR \times T$, and $Bj=min(Bj, PBR\_BS)$. T is a time period between two increment calculations of Bj. For example, the LCP follows the following steps (for convenience of illustration, it is assumed that a priority of LCH_1 is higher than a priority of LCH_2).

Step 1, radio resources are first allocated to LCH_1, for example, $LCH1\_ASG = min(SG,LCH1\_Bj,LCH1\_Buf)$, where a size of the radio resources allocated to LCH_1 is a minimum value among an SG to-be-allocated, a token variable LCH1_Bj for LCH1, and a buffer size LCH1_Buf for LCH1. After the allocation, the allocated resources are subtracted from the SG, and the token variable and buffer size for LCH1 are updated. An example of formulas is as follows:

$SG=SG- LCH1\_ASG$, which indicates that the allocated resources are subtracted from the SG;

$LCH1\_Bj = LCH1\_Bj - LCH1\_ASG$, which indicates that the allocated resources are subtracted from the token variable for LCH1, and the token variable for LCH1 is updated; and

$LCH1\_Buf= LCH1\_Buf - LCH1\_ASG$, which indicates that the allocated resources are subtracted from the buffer size for LCH_1, and the buffer size for LCH_1 is updated.

If any SG remains, radio resources may be further allocated to LCH_2. For example, $LCH2\_ASG = min(SG,LCH2\_Bj,LCH2\_Buf)$, which indicates that a size of the radio resources allocated to LCH_2 is a minimum value among the remaining SG, a token variable LCH2_Bj for LCH_2, and a buffer size LCH2_Buf for LCH_2.

After the allocation, the allocated resources are subtracted from the SG, and the token variable and buffer size for LCH_2 are updated. An example of formulas is as follows:

$SG=SG- LCH2\_ASG$, which indicates that the allocated resources are subtracted from the SG;

$LCH2\_Bj = LCH2\_Bj - LCH2\_ASG$, which indicates that the allocated resources are subtracted from the token variable for LCH_2, and the token variable for LCH_2 is updated; and

$LCH2\_Buf= LCH2\_Buf - LCH2\_ASG$, which indicates that the allocated resources are subtracted from the buffer size for LCH_2.

Step 2, if the SG is still greater than 0, the allocation may proceed in such a priority order of LCH_1 and LCH_2, until all radio resources SG are allocated or LCH_2 has also received its allocation.

This algorithm is also applicable to the case of more than two logical channels, as long as step 1 and step 2 continue to be applied in the same method to logical channels ranked based on logical channel priorities.

By using the above scheme, the problem of starvation in the 3GPP 3G system is overcome to a certain extent but cannot be avoided completely, and this problem is particularly severe when there are relatively few allocable radio resources compared to the sum of buffers of logical channels participating in the LCP.

The following gives an illustration of an example.

In FIG. 2, there are three logical channels LCH1, LCH2, and LCH3 participating in LCP. A dividing line between two blocks in each logical channel represents a token Bj accumulated for each respective logical channel according to a configured PBR. The part above Bj represents the higher demand for radio resources from a buffer of each logical channel than Bj. Since schedulable radio resources SG as a whole may be smaller than the sum of tokens Bj for all logical channels, assuming that an order of logical channel priorities is LCH1, LCH2, and LCH3, then according to the above method, after radio resources are allocated to LCH1 and LCH2, radio resources that can be allocated to LCH3 are very limited and smaller than Bj for LCH3. That is to say, starvation still occurs for LCH3. If the schedulable radio resources remain tight, LCH3 will always be in a state of starvation.

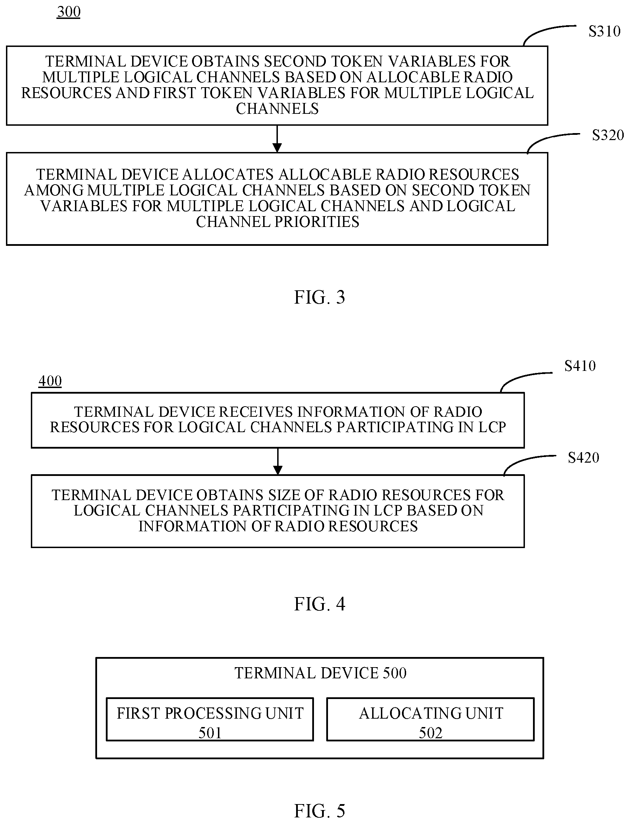

FIG. 3 is a schematic flowchart of a resource allocation method 300 according to an embodiment of the disclosure. Optionally, the method is applicable to the system illustrated in FIG. 1, but is not limited thereto. The method includes at least part of the following contents.

At S310, a terminal device obtains second token variables for multiple logical channels based on allocable radio resources and first token variables for the multiple logical channels.

At S320, the terminal device allocates the allocable radio resources among the multiple logical channels based on the second token variables for the multiple logical channels and logical channel priorities.

In embodiments of the disclosure, the logical channel may generally include a control channel and a traffic channel. The control channel is mainly used for transmitting control plane information, and the traffic channel is mainly used for transmitting user plane information.

In embodiments of the disclosure, the allocable radio resources may be scheduled by a network for the terminal device. A network device may schedule the allocable radio resources for the terminal device through dynamic scheduling, semi-persistent scheduling, or the like. The terminal device may allocate the allocable radio resources to multiple logical channels that need to be used by the terminal device.

In embodiments of the disclosure, a PBR and a token bucket may be configured for each logical channel according to QoS requirements, and a first token variable may be configured for each logical channel. For each logical channel, the first token variable is accumulated over time, but a maximum value of the first token variable does not exceed the token bucket. Then, a second token variable for each of the multiple logical channels may be obtained through adjustment based on the allocable radio resources and a first token variable for each of the multiple logical channels. If the allocable radio resources are less than the sum of buffers of multiple logical channels involved, then for each of the multiple logical channels, the first token variable is adjusted to the second token variable, so that resources can be reasonably allocated to the multiple logical channels, thereby alleviating the problem of starvation of the logical channels.

In an embodiment, the allocable radio resources include radio resources participating in LCP, and the LCP includes allocation of the allocable radio resources by the terminal device among logical channels participating in the LCP based on the logical channel priorities. In embodiments of the disclosure, radio resources for the logical channels participating in the LCP, which may also be referred to as the radio resources participating in the LCP, may include the sum SG_A of allocable radio resources participating in the same LCP in a terminal device. If there are $N$ logical channels participating in the LCP, the LCP may include allocation of SG_A by the terminal device among the $N$ logical channels based on logical channel priorities of the $N$ logical channels participating in the LCP.

In an embodiment, the multiple logical channels include the logical channels participating in the LCP or a subset of the logical channels participating in the LCP. In embodiments of the disclosure, token variables for all of the logical channels participating in the LCP (i.e., a full set of the logical channels participating in the LCP) may be adjusted, or token variables for part of the logical channels participating in the LCP (i.e., the subset of the logical channels participating in the LCP) may be adjusted. For example, radio resources participating in the LCP are represented by SG_A, and all logical channels participating in the LCP are $N$ logical channels. Second token variables for the $N$ logical channels may be obtained through adjustment based on SG_A and first token variables for the $N$ logical channels, respectively. Second token variables for $N$-1 logical channels among the $N$ logical channels may be obtained through adjustment based on SG_A and first token variables for the $N$-1 logical channels, respectively. *"N-1"* in this example may also be changed into *"N-2"*, *"N-3"*, or the like, which may be flexibly adjusted according to actual needs.

In an embodiment, a first token variable for a logical channel with the highest priority among the logical channels participating in the LCP is unchanged. For example, among $N$ logical channels participating in the LCP, a first token variable for a logical channel with the highest priority is not adjusted, and only for the remaining $N$-1 logical channels, first token variables are adjusted to second token variables respectively. This helps ensure that more radio resources can be allocated to the logical channel with the highest priority in time, and ensure normal scheduling for the logical channel with the highest priority. Similarly, first token variables for logical channels with logical channel priorities ranked at top few positions may also be limited to be unchanged. For example, among $N$ logical channels participating in the LCP, first token variables for logical channels with logical channel priorities ranked at first $M$ positions are not adjusted, and only for the remaining $N$-$M$ logical channels, first token variables are adjusted to second token variables respectively, where $N$ is greater than $M$.

In an embodiment, for one logical channel among the multiple logical channels, a first token variable for the one logical channel is determined based on a previous token variable, a PBR, and an accumulation time for the one logical channel, and the first token variable for the one logical channel is less than or equal to a token bucket size of the one logical channel. The accumulation time includes a time interval between starts of two consecutive accumulations of the first token variable. For example, a first token variable for one logical channel may be accumulated from 0 over time. As an example, a first token variable for one logical channel is equal to a PBR of the one logical channel multiplied by an accumulation time, and an example of a formula may be: $Bj = PBR \times T$. An accumulation time for one logical channel may include time calculated from the previous time when radio resources are allocated to the one logical channel to the current time when radio resources are prepared to be allocated to the one logical channel again. If a first token variable accumulated reaches a token bucket size, the accumulation will not proceed, and the token bucket size is used as the first token variable for participating in the subsequent radio resource allocation.

In an embodiment, for one logical channel among the multiple logical channels, a second token variable for the one logical channel is less than or equal to a first token variable for the one logical channel. For example, a second token variable for each of $N$ logical channels is less than or equal to a respective first token variable. If the size of allocable radio resources is less than the sum of buffers of multiple logical channels involved, resources can be reasonably allocated to the multiple logical channels based on an adjusted second token variable for each of the multiple logical channels, and radio resources allocated to high-priority logical channels can be appropriately reduced, so that low-priority logical channels also have a chance to be allocated with radio resources. By allowing the high-priority logical channels to tolerate a certain degree of starvation, the degree of starvation of the low-priority logical channels is reduced. In this case, the high-priority logical channels have a relatively low degree of starvation, and the low-priority logical channels have a relatively high degree of starvation.

In an embodiment, an adjustment parameter of the first token variables includes at least one of: the first token variables for the multiple logical channels; a size of radio resources; or a first distribution function. In embodiments of the disclosure, the size of the radio resources for adjusting the first token variables may be equal to a size of the allocable radio resources (a size of radio resources for logical channels participating in LCP configured by the network), or may be equal to a size of remaining radio resources after the previous allocation. For example, for a logical channel ranked first among the multiple logical channels based on the logical channel priorities, a size of radio resources for adjusting a first token variable may be equal to a size of the allocable radio resources. For another example, for logical channels ranked second and later among the multiple logical channels based on the logical channel priorities, a size of radio resources for adjusting first token variables may be equal to a size of remaining radio resources after the previous allocation.

In an embodiment, a size of radio resources for logical channels participating in LCP is less than a sum of first token variables for the logical channels participating in the LCP. For example, a size $SG\_A$ of radio resources for logical channels participating in LCP is less than a sum of first token variables for $N$ logical channels participating in the LCP.

In an embodiment, the first distribution function is an increment function. A value of the increment function may increase with a value of an input parameter of this function. For example, if the input parameter of the first distribution function is a number of a logical channel that has been ranked based on the logical channel priorities, a value of the first distribution function may increase with the number of the logical channel. Based on the first distribution function, an adjustment range of a token variable for each of the multiple logical channels may increase with a number of that logical channel.

In an embodiment, for one logical channel among the multiple logical channels, a second token variable for the one logical channel is a difference between a first token variable for the one logical channel and a first product, and the first product is a product of the first token variable and a value of a first distribution function for the one logical channel; and the value of the first distribution function is obtained by using a number of the one logical channel as an input parameter of the first distribution function. For example, the first distribution function is $F(n)$, where $n$ represents a number of a logical channel, i.e., the $n$-th logical channel. If a first token variable for one logical channel is $Bj\_1$, and a second token variable for the one logical channel is $Bj\_2$, then for a relationship between the second token variable and the first token variable for the one logical channel, reference can be made to the following formula: $Bj\_2 = Bj\_1 - Bj\_1 \times F(n) = Bj\_1 (1 - F(n))$.

In an embodiment, the first distribution function is used for adjusting the first token variables for the multiple logical channels in a descending order of priorities of the multiple logical channels. For example, a high priority corresponds to a relatively small value of the first distribution function, and for the high priority, a relatively small amount of reduction is required for adjusting a first token variable to a second token variable. In comparison, a low priority corresponds to a relatively large value of the first distribution function, and for the low priority, a relatively large amount of reduction is required for adjusting a first token variable to a second token variable.

In an embodiment, the first distribution function, the size of radio resources, and a first token satisfy a normalization condition.

In an embodiment, the normalization condition includes the following. A first token variable for each of the multiple logical channels is divided by a first difference and multiplied by a corresponding value of the first distribution function to obtain a first value. A sum of first values of the multiple logical channels is equal to 1. The first difference is equal to a difference between a sum of first token variables for logical channels participating in LCP and a size of radio resources for the logical channels participating in the LCP, and a value of the first distribution function is obtained by using a number of one logical channel as an input parameter of the first distribution function.

For example, if the sum of the first token variables for the logical channels participating in the LCP is $LCH\_Bj$, and the size of the radio resources for the logical channels participating in the LCP is $SG\_A$, then the first difference is $Delta = LCH\_Bj - SG\_A$. If $LCH\_Bj$ is greater than $SG\_A$, Delta is greater than 0. If a first token variable for one logical channel is $LCH\_n\_Bj$, a first value corresponding to the one logical channel is $(LCH\_n\_Bj/Delta) \times F(n)$. A sum of first values of all logical channels may be represented by $Sum((LCH\_n\_Bj/Delta) \times F(n)) = 1$. Herein, $n$ may be counted from 0, and in this case, $n = 0$ to $N-1$; or $n$ may be counted from 1, and in this case, $n = 1$ to $N$.

In an embodiment, the terminal device performs the LCP on the multiple logical channels based on the second token variables for the multiple logical channels as follows. Corresponding radio resources are sequentially allocated to each logical channel among the multiple logical channels in a descending order of priorities. A size of radio resources for the logical channel is a minimum value among remaining radio resources, a second token variable for the logical channel, and a buffer data volume on the logical channel.

In an embodiment, when the logical channel is a top-ranked logical channel, the remaining radio resources are radio resources for logical channels participating in the LCP. When the logical channel is not the top-ranked logical channel, the remaining radio resources are radio resources remaining after the terminal device allocates radio resources to a previous logical channel.

In embodiments of the disclosure, the multiple logical channels may be first ranked in a descending order of the logical channel priorities in embodiments of the disclosure. Then, starting from the first logical channel, radio resources are sequentially allocated to each logical channel according to the ranking order. Remaining radio resources for the first logical channel ranked top are equal to all of the radio resources for the logical channels participating in the LCP. Remaining radio resources for the second and later logical channels are equal to allocable radio resources remaining after the radio resources are allocated to the previous logical channel.

For example, there are three logical channels participating in the LCP, which are ranked as LCH_1, LCH_2, and LCH_3 in a descending order of logical channel priorities. Radio resources for the logic channels participating in the LCP include SG_A. A second token variable for LCH_1 is first obtained based on SG_A and a first token variable for LCH_1, and then a minimum value among SG_A, the second token variable for LCH_1, and a buffer data volume on LCH_1 is obtained through comparison. LCH1_ASG, i.e., radio resources allocated to LCH_1, is equal to the minimum value. Then, parameters such as remaining radio resources SG_R, the first token variable, and the buffer data volume are updated with reference to the following formulas:

$SG\_R = SG\_A - LCH1\_ASG$, which indicates that the resources allocated to LCH_1 are subtracted from the radio resources SG_A for the logical channels participating in the LCP;

$LCH1\_Bj2 = LCH1\_Bj2 - LCH1\_ASG$, which indicates that after each allocation of radio resources, the allocated resources are subtracted from the second token variable LCH1_Bj2 for LCH_1, and the second token variable for LCH_1 is updated; and

$LCH1\_Buf = LCH1\_Buf - LCH1\_ASG$, which indicates that after each allocation of radio resources, the allocated resources are subtracted from the buffer data volume LCH1_Buf on LCH_1, and the buffer data volume on LCH_1 is updated.

Then, if SG_R, i.e., the remaining radio resources, is not 0, radio resources may be further allocated to LCH_2. A second token variable for LCH_2 is first obtained based on SG_A and a first token variable for LCH_2, and then a minimum value among SG_A, the second token variable for LCH_2, and a buffer data volume on LCH_12 is obtained through comparison. LCH2_ASG, i.e., radio resources allocated to LCH_2, is equal to the minimum value. Then, parameters such as remaining radio resources SG_R, the first token variable, and the buffer data volume are updated with reference to the following formulas:

$SG\_R = SG\_R - LCH2\_ASG$, which indicates that the resources allocated to LCH_2 are subtracted from the remaining radio resources SG_B;

$LCH1\_Bj2 = LCH2\_Bj2 - LCH2\_ASG$, which indicates that after each allocation of radio resources, the allocated resources are subtracted from the second token variable LCH1_Bj2 for LCH_2, and the second token variable for LCH_2 is updated; and

$LCH2\_Buf = LCH2\_Buf - LCH2\_ASG$, which indicates that after each allocation of radio resources, the allocated resources are subtracted from the buffer data volume LCH2_Buf on LCH_2, and the buffer data volume on LCH_2 is updated.

Remaining radio resources SG_R - LCH2_ASG after the allocation to LCH_2 may be further allocated to LCH_3. A specific allocation method is similar to that for LCH_2 and will not be repeated herein.

FIG. 4 is a schematic flowchart of a resource allocation method 400 according to another embodiment of the disclosure. The method may include one or more features of the above resource allocation method 300. In an embodiment, the resource allocation method 400 further includes the following.

At S410, a terminal device receives information of radio resources for logical channels participating in LCP.

At S420, the terminal device obtains a size of the radio resources for the logical channels participating in the LCP based on the information of the radio resources.

For example, the terminal device receives from a network device an SG corresponding to the radio resources for the logical channels participating in the LCP. Based on the SG, the terminal device can calculate a resource size of the radio resources for the logical channels participating in the LCP in time domain, frequency domain, spatial domain, or the like. In the above resource allocation method, at least one of time-domain radio resources, frequency-domain radio resources, spatial-domain radio resources, or the like can be allocated to the logical channels.

In embodiments of the disclosure, when allocable radio resources are less than the sum of buffers of the logical channels participating in the LCP, a cause of starvation mainly lies in that in the first step of the LCP algorithm for the 4G/5G system above, radio resources are always allocated to logical channels strictly according to an order of logical channel priorities and accumulated tokens Bj. When radio resources are relatively sufficient, this LCP algorithm may allow high-priority logical channels first to satisfy QoS requirements specified by a PBR. However, when radio resources are relatively scarce, if the same principle is kept, the problem of starvation will occur. To improve fairness, all logical channels should tolerate a certain degree of starvation in this case, but it is allowed that the high-priority logical channels have a relatively low degree of starvation while low-priority logical channels have a relatively high degree of starvation.

A resource scheduling method in embodiments of the disclosure can be understood as a method for scheduling logical channels, which may specifically include the following. When SG, i.e., allocable radio resources, is less than a sum of Bj for logical channels participating in LCP, a difference between the SG and the sum of Bj is distributed among the logical channels according to a certain rule. Differences allocated to logical channels are distributed in a descending order of the logical channel priorities, that is, the proportion at which Bj is reduced is lowest for a logical channel with the highest priority, and then increases sequentially. It may be noted that during the calculation of the difference between the SG and the sum of Bj, all of the logical channels participating in the LCP need to be taken into account. During the specific adjustment of Bj, logical channels involved may be a subset of the logical channels participating in the LCP, for example, the logical channel with the highest priority may be exempted.

Assuming that a certain logical channel is ranked based on logical channel priorities among logical channels participating in adjustment of Bj, with an order of $n$, and a distribution function for adjusting Bj is F($n$), then an adjusted value of Bj for this logical channel is: LCH\_$n$\_Bj = LCH\_$n$\_Bj(1- F($n$)), and $n$>=0.

After Bj is adjusted according to the following method, LCP is performed according to a method for LCP.

The distribution function F($n$) is an increment function. For example, F($n$) is a linear distribution function, e.g., *F($n$) =a+b×n,* and *b*>0.

Assuming that the number of logical channels is *N* in total, then *a, b, N,* SG, and Bj satisfy the following condition (i.e., a normalization condition):

$$\text{Delta} = \text{sum(LCH}\_n\_\text{Bj})\text{-SG, and } n\text{=0 to } N\text{-1} \quad (1)$$

$$\text{Sum((LCH}\_n\_\text{Bj/Delta)}\times \text{F}(n))\text{=1, and } n\text{=0 to } N\text{-1} \quad (2)$$

In the above, sum is a summation symbol, Delta represents a difference, LCH\_$n$\_Bj represents a first token variable for the *n*-th logical channel. The following gives several examples of allocation.

Example 1:

It is assumed that F($n$)=a+b×n.

Assuming that *N*=3, LCH\_0\_Bj=40, LCH\_1\_Bj=20, LCH\_2\_Bj=60, SG=100, and *a*=0, then *b* needs to satisfy the following conditions: Delta=120-100=20; and 40/20×0+20/20×b+60/20×2b=1.

Therefore, *b*=1/7.

Values of *a, b,* and *n* may be substituted into a formula for F($n$) to obtain: F(0)=0, F(1)=1/7, and F(2)=2/7.

Formulas for adjusting Bj are: LCH\_0\_Bj = LCH\_0\_Bj = 40; LCH\_1 \_Bj = LCH\_1\_Bj×(1-1/7)=120/7; and LCH\_2\_Bj = LCH\_2\_Bj×(1-2/7)=300/7, respectively.

Example 2:

It is assumed that *F($n$)=a+b×n.*

Assuming that *N*=4, LCH\_0\_Bj=40, LCH\_1\_Bj=20, LCH\_2\_Bj=60, LCH\_3\_Bj=40, SG=130, and *a*=2.5%, then *b* needs to satisfy the following formulas: Delta = 160-130=30; and 40×2.5%+20×(2.5%+b)+60×(2.5%+2b)+40×(2.5%+3b)=30.

Therefore, *b*=10%.

Values of *a, b,* and *n* may be substituted into a formula for F($n$) to obtain: F(0)=2.5%; F(1)=12.5%; F(2)=22.5%; and F(3)=32.5%.

Formulas for adjusting Bj are: LCH\_0\_Bj = LCH\_0\_Bj ×(1-F(0))=40×97.5%=39; LCH\_1\_Bj = LCH\_1\_Bj×(1-F(1))=20×87.5%=17.5; LCH\_2\_Bj = LCH\_2\_Bj×(1-F(2))=60×77.5%=46.5; and LCH\_3\_Bj = LCH\_3\_Bj×(1-F(3)) =40×67.5%=27, respectively.

Example 3:

It is assumed that *F($n$)=a+b×n^2.*

Assuming that *N*=3, LCH\_0\_Bj=40, LCH\_1\_Bj=20, LCH\_2\_Bj=60, SG=91, and *a*=2.5%, then *b* needs to satisfy the following formulas: Delta=120-91=29; and $40\times(2.5\%)+20\times(2.5\%+b)+60\times(2.5\%+4b)= 29$.

Therefore, *b*=10%.

Values of *a, b,* and *n* may be substituted into a formula for F(*n*) to obtain: F(0)=2.5%; F(1)=2.5%+10%=12.5%; and F(2)=2.5%+10%×4=42.5%.

Formulas for adjusting Bj are: LCH_0_Bj = LCH_0_Bj ×(1-2.5%)=39; LCH_1_Bj = LCH_1_Bj×(1-12.5%)=17.5; and LCH_2_Bj = LCH_2_Bj×(1-42.5%)=34.5, respectively.

After Bj is adjusted based on the above examples, a token variable to be used during allocation of radio resources is also changed to adjusted Bj. Assuming that adjusted Bj is denoted as BJ_N, a ranking order of the logical channel priorities is LCH_1 and LCH_2, and a sum of token variables for LCH_1 and LCH_2 before adjustment is greater than allocable radio resources SG, then an example of the procedure after adjustment is as follows.

Step 1, radio resources are first allocated to LCH_1, for example, LCH1_ASG = min(SG,LCH1_Bj_N,LCH1_Buf), where LCH1_ASG, i.e., the radio resources allocated to LCH_1, is a minimum value among an SG to-be-allocated, an adjusted token variable LCH1_Bj_N for LCH1, and a buffer size LCH1_Buf for LCH1. After the allocation, the allocated resources are subtracted from the SG, and the adjusted token variable and buffer size for LCH1 are updated. An example of formulas is as follows:

SG=SG- LCH1_ASG, which indicates that the allocated resources are subtracted from the SG;

LCH1_Bj_N = LCH1_Bj_N - LCH1_ASG, which indicates that the allocated resources are subtracted from the adjusted token variable for LCH1, and the adjusted token variable for LCH1 is updated; and

LCH1_Buf= LCH1_Buf - LCH1_ASG, which indicates that the allocated resources are subtracted from the buffer size for LCH_1, and the buffer size for LCH_1 is updated.

If any SG remains, radio resources may be further allocated to LCH_2. For example, LCH2_ASG = min(SG,LCH2_Bj_N,LCH2_Buf), which indicates that a size of the radio resources allocated to LCH_2 is a minimum value among the remaining SG, an adjusted token variable LCH2_Bj_N for LCH_2, and a buffer size LCH2_Buf for LCH_2.

After the allocation, the allocated resources are subtracted from the SG, and the token variable and buffer size for LCH_2 are updated. An example of formulas is as follows:

SG=SG- LCH2_ASG, which indicates that the allocated resources are subtracted from the SG;

LCH2_Bj _N = LCH2_Bj_N - LCH2_ASG, which indicates that the allocated resources are subtracted from the adjusted token variable for LCH_2, and the adjusted token variable for LCH_2 is updated; and

LCH2_Buf= LCH2_Buf - LCH2_ASG, which indicates that the allocated resources are subtracted from the buffer size for LCH_2.

Step 2, if the SG is still greater than 0, the allocation may proceed in such a priority order of LCH_1 and LCH_2 illustrated in step 1, until all radio resources SG are allocated. In this way, high-priority logical channels such as LCH_1 are allocated with few resources, so that low-priority logical channels also have a chance to be allocated with some resources.

In embodiments of the disclosure, by adjusting a token variable for each LCH, all logical channels should tolerate a certain degree of starvation, and it is allowed that the high-priority logical channels have a relatively low degree of starvation while the low-priority logical channels have a relatively high degree of starvation. As such, radio resources can be more fairly allocated between different logical channels.

FIG. 5 is a schematic block diagram of a terminal device 500 according to an embodiment of the disclosure. The terminal device 500 may include a first processing unit 501 and an allocating unit 502. The first processing unit 501 is configured to obtain second token variables for multiple logical channels based on allocable radio resources and first token variables for the multiple logical channels. The allocating unit 502 is configured to allocate the allocable radio resources among the multiple logical channels based on the second token variables for the multiple logical channels and logical channel priorities.

In an embodiment, the allocable radio resources include radio resources participating in LCP, and the LCP includes allocation of the allocable radio resources by the terminal device among logical channels participating in the LCP based on the logical channel priorities.

In an embodiment, the multiple logical channels include the logical channels participating in the LCP or a subset of the logical channels participating in the LCP.

In an embodiment, a first token variable for a logical channel with a highest priority among the logical channels participating in the LCP is unchanged.

In an embodiment, for one logical channel among the multiple logical channels, a first token variable for the one logical channel is determined based on a previous token variable, a PBR, and an accumulation time for the one logical channel, and the first token variable for the one logical channel is less than or equal to a token bucket size of the one logical channel. The accumulation time includes a time interval between starts of two consecutive accumulations of the first token variable.

In an embodiment, for one logical channel among the multiple logical channels, a second token variable for the one logical channel is less than or equal to a first token variable for the one logical channel.

In an embodiment, an adjustment parameter of the first token variables includes at least one of: the first token variables for the multiple logical channels; a size of radio resources; or a first distribution function.

In an embodiment, a size of radio resources for logical channels participating in LCP is less than a sum of first token variables for the logical channels participating in the LCP.

In an embodiment, the first distribution function is an increment function.

In an embodiment, for one logical channel among the multiple logical channels, a second token variable for the one logical channel is a difference between a first token variable for the one logical channel and a first product, and the first product is a product of the first token variable and a value of a first distribution function for the one logical channel; and the value of the first distribution function is obtained by using a number of the one logical channel as an input parameter of the first distribution function.

In an embodiment, the first distribution function is used for adjusting the first token variables for the multiple logical channels in a descending order of priorities of the multiple logical channels.

In an embodiment, the first distribution function, the size of radio resources, and a first token satisfy a normalization condition.

In an embodiment, the normalization condition includes the following. A first token variable for each of the multiple logical channels is divided by a first difference and multiplied by a corresponding value of the first distribution function to obtain a first value. A sum of first values of the multiple logical channels is equal to 1. The first difference is equal to a difference between the sum of the first token variables for the logical channels participating in the LCP and the size of the radio resources for the logical channels participating in the LCP, and a value of the first distribution function is obtained by using a number of one logical channel as an input parameter of the first distribution function.

In an embodiment, the terminal device performs the LCP on the multiple logical channels based on the second token variables for the multiple logical channels as follows. Corresponding radio resources are sequentially allocated to each logical channel among the multiple logical channels in a descending order of priorities. A size of radio resources for the logical channel is a minimum value among remaining radio resources, a second token variable for the logical channel, and a buffer data volume on the logical channel.

In an embodiment, when the logical channel is a top-ranked logical channel, the remaining radio resources are radio resources for logical channels participating in the LCP. When the logical channel is not the top-ranked logical channel, the remaining radio resources are radio resources remaining after the terminal device allocates radio resources to a previous logical channel.

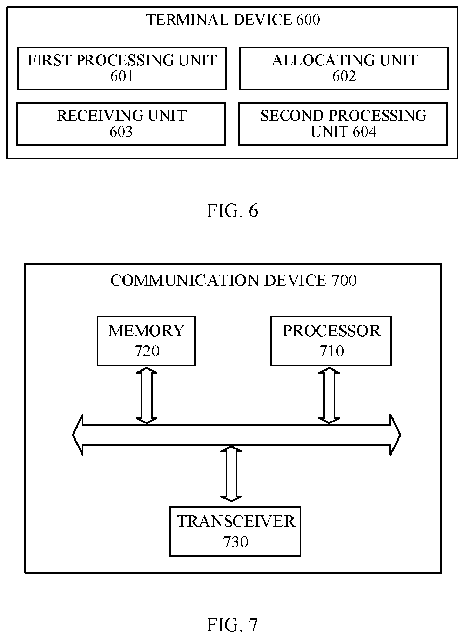

FIG. 6 is a schematic block diagram of a terminal device 600 according to another embodiment of the disclosure. The terminal device 600 may include a first processing unit 601 and an allocating unit 602. The first processing unit 601 is configured to obtain second token variables for multiple logical channels based on allocable radio resources and first token variables for the multiple logical channels. The allocating unit 602 is configured to allocate the allocable radio resources among the multiple logical channels based on the second token variables for the multiple logical channels and logical channel priorities.

The first processing unit 601 and the allocating unit 602 are similar to those in the terminal device 500 described above, and reference can be made to related illustrations.

In an embodiment, as illustrated in FIG. 6, the terminal device 600 further includes a receiving unit 603 and a second processing unit 604. The receiving unit 603 is configured to receive information of radio resources participating in LCP. The second processing unit 604 is configured to obtain a size of radio resources for logical channels participating in the LCP based on the information of the radio resources.

The terminal devices 500 and 600 in embodiments of the disclosure can implement corresponding functions of the terminal device in the foregoing method embodiments. For the procedure, function, implementation, and advantage corresponding to each module (sub-module, unit, or assembly, etc.) in the terminal devices 500 and 600, reference can be made to the corresponding illustrations in the foregoing method embodiments, which will not be repeated herein. It may be noted that, the functions of various modules (sub-modules, units, or assemblies, etc.) in the terminal devices 500 and 600 described in embodiments of the disclosure may be implemented by different modules (sub-modules, units, or assemblies, etc.), or may be implemented by the same module (sub-module, unit, or assembly, etc.).

FIG. 7 is a schematic structural diagram of a communication device 700 according to embodiments of the disclosure. The communication device 700 includes a processor 710. The processor 710 may invoke and execute a computer program stored in a memory, to cause the communication device 700 to implement the method in embodiments of the disclosure.

In an embodiment, the communication device 700 may further include a memory 720. The processor 710 may invoke and execute a computer program stored in the memory 720, to cause the communication device 700 to implement the method in embodiments of the disclosure.

The memory 720 may be a separate device independent of the processor 710, or may be integrated into the processor 710.

In an embodiment, the communication device 700 may further include a transceiver 730. The processor 710 may control the transceiver 730 to communicate with another device, and specifically, may transmit information or data to another device, or receive information or data from the another device.

The transceiver 730 may include a transmitter and a receiver. The transceiver 730 may further include an antenna, where one or more antennas may be provided.

In an embodiment, the communication device 700 may be the terminal device in embodiments of the disclosure, and the communication device 700 may implement corresponding procedures implemented by the terminal device in the methods according to embodiments of the disclosure, which will not be repeated herein for the sake of brevity.

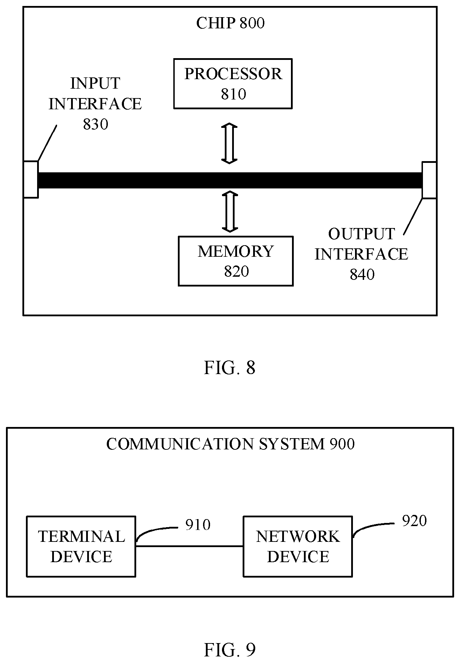

FIG. 8 is a schematic structural diagram of a chip 800 according to embodiments of the disclosure. The chip 800 includes a processor 810. The processor 810 may invoke and execute a computer program stored in a memory to implement the method in embodiments of the disclosure.

In an embodiment, the chip 800 may further include a memory 820. The processor 810 may invoke and execute a computer program stored in the memory 820, to implement the method performed by the terminal device or the network device in embodiments of the disclosure.

The memory 820 may be a separate device independent of the processor 810, or may be integrated into the processor 810.

In an embodiment, the chip 800 may further include an input interface 830. The processor 810 may control the input interface 830 to communicate with another device or chip, and specifically, may obtain information or data transmitted by the another device or chip.

In an embodiment, the chip 800 may further include an output interface 840. The processor 810 may control the output interface 840 to communicate with another device or chip, and specifically, may output information or data to the another device or chip.

In an embodiment, the chip may be applied to the network device in embodiments of the disclosure, and the chip may implement corresponding procedures implemented by the network device in the methods according to embodiments of the disclosure, which will not be repeated herein for the sake of brevity.

In an embodiment, the chip may be applied to the terminal device in embodiments of the disclosure, and the chip may implement corresponding procedures implemented by the terminal device in the methods according to embodiments of the disclosure, which will not be repeated herein for the sake of brevity.

The chip applied to the network device may be the same as or different from the chip applied to the terminal device.

It may be understood that, the chip mentioned in embodiments of the disclosure may also be a system-on-chip (SoC).

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

FIG. 9 is a schematic block diagram of a communication system 900 according to embodiments of the disclosure. The communication system 900 includes a terminal device 910 and a network device 920.

The terminal device 910 is configured to obtain second token variables for multiple logical channels based on allocable radio resources and first token variables for the multiple logical channels, and allocate the allocable radio resources among the multiple logical channels based on the second token variables for the multiple logical channels and logical channel priorities.

The network device 920 is configured to send to the terminal device information of radio resources for logical channels participating in LCP.

The terminal device 910 can be configured to implement corresponding functions implemented by the terminal device in the foregoing methods, and the network device 920 can be configured to implement corresponding functions implemented by the network device in the foregoing methods, which will not be repeated herein for the sake of brevity.

All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A resource allocation method, comprising:

   obtaining, by a terminal device, second token variables for a plurality of logical channels based on allocable radio resources and first token variables for the plurality of logical channels; and

   allocating, by the terminal device, the allocable radio resources among the plurality of logical channels based on the second token variables for the plurality of logical channels and logical channel priorities.

2. The method of claim 1, wherein the allocable radio resources comprise radio resources participating in logical channel prioritization (LCP), and the LCP comprises allocation of the allocable radio resources by the terminal device among logical channels participating in the LCP based on the logical channel priorities.

3. The method of claim 2, wherein the plurality of logical channels comprise the logical channels participating in the LCP or a subset of the logical channels participating in the LCP.

4. The method of claim 3, wherein a first token variable for a logical channel with a highest priority among the logical channels participating in the LCP is unchanged.

5. The method of claim 1, wherein for one logical channel among the plurality of logical channels, a first token variable for the one logical channel is determined based on a previous token variable, a priority bit rate (PBR), and an accumulation time for the one logical channel, and the first token variable for the one logical channel is less than or equal to a token bucket size of the one logical channel, wherein the accumulation time comprises a time interval between starts of two consecutive accumulations of the first token variable.

6. The method of claim 1, wherein for one logical channel among the plurality of logical channels, a second token variable for the one logical channel is less than or equal to a first token variable for the one logical channel.

7. The method of claim 1, wherein an adjustment parameter of the first token variables comprises at least one of: the first token variables for the plurality of logical channels; a size of radio resources; or a first distribution function.

8. The method of claim 7, wherein a size of radio resources for logical channels participating in LCP is less than a sum of first token variables for the logical channels participating in the LCP.

9. The method of claim 7, wherein the first distribution function is an increment function.

10. The method of claim 9, wherein for one logical channel among the plurality of logical channels, a second token variable for the one logical channel is a difference between a first token variable for the one logical channel and a first product, and the first product is a product of the first token variable and a value of a first distribution function for the one logical channel; and the value of the first distribution function is obtained by using a number of the one logical channel as an input parameter of the first distribution function.

11. The method of claim 7, wherein the first distribution function is used for adjusting the first token variables for the plurality of logical channels in a descending order of priorities of the plurality of logical channels.

12. The method of claim 11, wherein the first distribution function, the size of radio resources, and a first token satisfy a normalization condition.

13. The method of claim 12, wherein the normalization condition comprises:
a first token variable for each of the plurality of logical channels being divided by a first difference and multiplied by a corresponding value of the first distribution function to obtain a first value; and a sum of first values of the plurality of logical channels being equal to 1; and the first difference being equal to a difference between a sum of first token variables for logical channels participating in LCP and a size of radio resources for the logical channels participating in the LCP, and a value of the first distribution function being obtained by using a number of one logical channel as an input parameter of the first distribution function.

14. The method of any one of claims 1 to 13, wherein performing, by the terminal device, the LCP on the plurality of logical channels based on the second token variables for the plurality of logical channels comprises:
allocating corresponding radio resources to each logical channel among the plurality of logical channels sequentially in a descending order of priorities, wherein a size of radio resources for the logical channel is a minimum value among remaining radio resources, a second token variable for the logical channel, and a buffer data volume on the logical channel.

15. The method of claim 14, wherein

in response to the logical channel being a top-ranked logical channel, the remaining radio resources are radio resources for logical channels participating in the LCP; and
in response to the logical channel being not the top-ranked logical channel, the remaining radio resources are radio resources remaining after the terminal device allocates radio resources to a previous logical channel.

16. The method of any one of claims 1 to 15, further comprising:

receiving, by the terminal device, information of radio resources participating in LCP; and
obtaining, by the terminal device, a size of radio resources for logical channels participating in the LCP based on the information of the radio resources.

17. A terminal device, comprising:

a processing unit configured to obtain second token variables for a plurality of logical channels based on allocable radio resources and first token variables for the plurality of logical channels; and
an allocating unit configured to allocate the allocable radio resources among the plurality of logical channels based on the second token variables for the plurality of logical channels and logical channel priorities.

18. The device of claim 17, wherein the allocable radio resources comprise radio resources participating in logical channel prioritization (LCP), and the LCP comprises allocation of the allocable radio resources by the terminal device among logical channels participating in the LCP based on the logical channel priorities.

19. The device of claim 18, wherein the plurality of logical channels comprise the logical channels participating in the LCP or a subset of the logical channels participating in the LCP.

20. The device of claim 19, wherein a first token variable for a logical channel with a highest priority among the logical channels participating in the LCP is unchanged.

21. The device of claim 17, wherein for one logical channel among the plurality of logical channels, a first token variable for the one logical channel is determined based on a previous token variable, a priority bit rate (PBR), and an accumulation time for the one logical channel, and the first token variable for the one logical channel is less than or equal to a token bucket size of the one logical channel, wherein the accumulation time comprises a time interval between starts of two consecutive accumulations of the first token variable.

22. The device of claim 17, wherein for one logical channel among the plurality of logical channels, a second token variable for the one logical channel is less than or equal to a first token variable for the one logical channel.

23. The device of claim 17, wherein an adjustment parameter of the first token variables comprises at least one of: the first token variables for the plurality of logical channels; a size of radio resources; or a first distribution function.

24. The device of claim 23, wherein a size of radio resources for logical channels participating in LCP is less than a sum of first token variables for the logical channels participating in the LCP.

25. The device of claim 23, wherein the first distribution function is an increment function.

26. The device of claim 25, wherein for one logical channel among the plurality of logical channels, a second token variable for the one logical channel is a difference between a first token variable for the one logical channel and a first product, and the first product is a product of the first token variable and a value of a first distribution function for the one logical channel; and the value of the first distribution function is obtained by using a number of the one logical channel as an input parameter of the first distribution function.

27. The device of claim 23, wherein the first distribution function is used for adjusting the first token variables for the plurality of logical channels in a descending order of priorities of the plurality of logical channels.

28. The device of claim 24, wherein the first distribution function, the size of radio resources, and a first token satisfy a normalization condition.

29. The device of claim 28, wherein the normalization condition comprises:
a first token variable for each of the plurality of logical channels being divided by a first difference and multiplied by a corresponding value of the first distribution function to obtain a first value; and a sum of first values of the plurality of logical channels being equal to 1; and the first difference being equal to a difference between the sum of the first token variables for the logical channels participating in the LCP and the size of the radio resources for the logical channels participating in the LCP, and a value of the first distribution function being obtained by using a number of one logical channel as an input parameter of the first distribution function.

30. The device of any one of claims 17 to 29, wherein performing, by the terminal device, the LCP on the plurality of logical channels based on the second token variables for the plurality of logical channels comprises:
allocating corresponding radio resources to each logical channel among the plurality of logical channels sequentially in a descending order of priorities, wherein a size of radio resources for the logical channel is a minimum value among remaining radio resources, a second token variable for the logical channel, and a buffer data volume on the logical channel.

31. The device of claim 30, wherein

in response to the logical channel being a top-ranked logical channel, the remaining radio resources are radio resources for logical channels participating in the LCP; and
in response to the logical channel being not the top-ranked logical channel, the remaining radio resources are radio resources remaining after the terminal device allocates radio resources to a previous logical channel.

32. The device of any one of claims 17 to 31, further comprising:

a receiving unit configured to receive information of radio resources participating in LCP; and
a processing unit configured to obtain a size of radio resources for logical channels participating in the LCP based on the information of the radio resources.

33. A terminal device, comprising:
a transceiver, a processor, and a memory, wherein the memory is configured to store a computer program, the transceiver is configured to communicate with other devices, and the processor is configured to invoke and execute the computer program stored in the memory, to cause the terminal device to perform the method of any one of claims 1 to 16.

34. A chip, comprising:
a processor configured to invoke and execute a computer program stored in a memory, to cause a device equipped with the chip to perform the method of any one of claims 1 to 16.

35. A computer-readable storage medium configured to store a computer program which, when executed by a device, causes the device to perform the method of any one of claims 1 to 16.

36. A computer program product comprising computer program instructions which cause a computer to perform the method of any one of claims 1 to 16.

37. A computer program causing a computer to perform the method of any one of claims 1 to 16.

FIG. 1

FIG. 2

300

TERMINAL DEVICE OBTAINS SECOND TOKEN VARIABLES FOR MULTIPLE LOGICAL CHANNELS BASED ON ALLOCABLE RADIO RESOURCES AND FIRST TOKEN VARIABLES FOR MULTIPLE LOGICAL CHANNELS

S310

TERMINAL DEVICE ALLOCATES ALLOCABLE RADIO RESOURCES AMONG MULTIPLE LOGICAL CHANNELS BASED ON SECOND TOKEN VARIABLES FOR MULTIPLE LOGICAL CHANNELS AND LOGICAL CHANNEL PRIORITIES

S320

FIG. 3

400

TERMINAL DEVICE RECEIVES INFORMATION OF RADIO RESOURCES FOR LOGICAL CHANNELS PARTICIPATING IN LCP

S410

TERMINAL DEVICE OBTAINS SIZE OF RADIO RESOURCES FOR LOGICAL CHANNELS PARTICIPATING IN LCP BASED ON INFORMATION OF RADIO RESOURCES

S420

FIG. 4

TERMINAL DEVICE 500

| FIRST PROCESSING UNIT 501 | ALLOCATING UNIT 502 |

FIG. 5

TERMINAL DEVICE 600

| FIRST PROCESSING UNIT 601 | ALLOCATING UNIT 602 |
|---|---|
| RECEIVING UNIT 603 | SECOND PROCESSING UNIT 604 |

FIG. 6

COMMUNICATION DEVICE 700

MEMORY 720

PROCESSOR 710

TRANSCEIVER 730

FIG. 7

CHIP 800

INPUT
INTERFACE
830

PROCESSOR
810

MEMORY
820

OUTPUT
INTERFACE
840

FIG. 8

COMMUNICATION SYSTEM 900

TERMINAL
DEVICE    — 910

NETWORK
DEVICE    — 920

FIG. 9

## INTERNATIONAL SEARCH REPORT

| International application No. |
|---|
| **PCT/CN2023/117581** |

**A. CLASSIFICATION OF SUBJECT MATTER**

H04W 72/044(2023.01)i

According to International Patent Classification (IPC) or to both national classification and IPC

**B. FIELDS SEARCHED**

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

CNABS, CNTXT, CNKI, ENTXTC, WPABSC, 3GPP: 资源, 分配, 逻辑信道, 令牌, 信用量, 个数, 令牌桶, 缓存器, 优先级, resource?, alocat+, logic w channel, credit, token?, number, bucket, buffer, variables, priority

**C. DOCUMENTS CONSIDERED TO BE RELEVANT**

| Category* | Citation of document, with indication, where appropriate, of the relevant passages | Relevant to claim No. |
|---|---|---|
| X | CN 110475284 A (TELECOMMUNICATIONS TECHNOLOGY RESEARCH INSTITUTE CO., LTD.) 19 November 2019 (2019-11-19) description, paragraphs [0094]-[0472], and figures 1-10 | 1, 5, 6, 17, 21, 22, 33-37 |
| A | CN 109788570 A (POTEVIO INFORMATION TECHNOLOGY CO., LTD.) 21 May 2019 (2019-05-21) entire document | 1-37 |
| A | CN 102413570 A (NTT DOCOMO INC.) 11 April 2012 (2012-04-11) entire document | 1-37 |
| A | CN 111294758 A (BEIJING SPREADTRUM HIGH-TECH COMMUNICATIONS TECHNOLOGY CO., LTD.) 16 June 2020 (2020-06-16) entire document | 1-37 |
| A | WO 2017171912 A1 (INTEL CORP.) 05 October 2017 (2017-10-05) entire document | 1-37 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 November 2023** | **15 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/117581**

| Patent document cited in search report | | | Publication date (day/month/year) | Patent family member(s) | | | Publication date (day/month/year) |
|---|---|---|---|---|---|---|---|
| CN | 110475284 | A | 19 November 2019 | WO | 2019214524 | A1 | 14 November 2019 |
| CN | 109788570 | A | 21 May 2019 | None | | | |
| CN | 102413570 | A | 11 April 2012 | None | | | |
| CN | 111294758 | A | 16 June 2020 | JP | 2022541928 | A | 28 September 2022 |
| | | | | EP | 4007318 | A1 | 01 June 2022 |
| | | | | EP | 4007318 | A4 | 17 August 2022 |
| | | | | WO | 2021012739 | A1 | 28 January 2021 |
| | | | | US | 2022272713 | A1 | 25 August 2022 |
| | | | | KR | 20220049002 | A | 20 April 2022 |
| WO | 2017171912 | A1 | 05 October 2017 | None | | | |

Form PCT/ISA/210 (patent family annex) (July 2022)